(19) Europäisches Patentamt

European Patent Office

Office européen des brevets

(11) EP 3 086 665 B1

(12) EUROPEAN PATENT SPECIFICATION

(45) Date of publication and mention of the grant of the patent:
11.10.2017 Bulletin 2017/41

(51) Int Cl.:
A23L 33/10 (2016.01)          A23L 29/00 (2016.01)
A23L 19/00 (2016.01)          A23L 33/16 (2016.01)
A23C 9/123 (2006.01)

(21) Application number: 14809034.3

(22) Date of filing: 09.12.2014

(86) International application number:
PCT/EP2014/076996

(87) International publication number:
WO 2015/091093 (25.06.2015 Gazette 2015/25)

(54) **FOOD COMPOSITION COMPRISING FERROUS PICOLINATE**

LEBENSMITTELZUSAMMENSETZUNG MIT EISENHALTIGEM PICOLINAT

COMPOSITION ALIMENTAIRE COMPRENANT DU PICOLINATE FERREUX

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.12.2013 EP 13197435

(43) Date of publication of application:
02.11.2016 Bulletin 2016/44

(73) Proprietor: Nestec S.A.
1800 Vevey (CH)

(72) Inventors:
• GALAFFU, Nicola
01210 Ornex (FR)
• HABEYCH NARVAEZ, Edwin Alberto
CH-1012 Lausanne (CH)
• MERINAT, Sylvie Joëlle
1510 Moudon (CH)

(74) Representative: Cogniat, Eric Jean Marie
Nestec S.A.
Centre de Recherche Nestlé
Vers-chez-les-Blanc
Case Postale 44
1000 Lausanne 26 (CH)

(56) References cited:
EP-A1- 1 011 344          US-A- 4 315 927
US-A1- 2002 192 308     US-A1- 2011 159 141
US-B1- 6 358 544

**Description**

The present invention relates to a non-beverage food composition. In particular the invention relates to a non-beverage food composition comprising fruit and/or vegetables, ferrous picolinate and phenolic chromophore compounds. Further aspects of the invention are the use of ferrous picolinate to fortify a non-beverage food product without colour change. A process for fortifying a non-beverage food product with iron is described. Billions of people around the world suffer from 'hidden hunger' or micronutrient malnutrition. They do not get enough of the micronutrients required to lead healthy productive lives from the foods that they eat. Micronutrients are vitamins and minerals (such as vitamin A, zinc, and iron) and are absolutely essential to good health. Micronutrient malnutrition can lower IQ, cause stunting and blindness in children, lower resistance to disease in both children and adults, and increase risks for both mothers and infants during childbirth. Iron deficiency is the most common and widespread nutritional disorder in the world. As well as affecting a large number of children and women in developing countries, it is the only nutrient deficiency which is also significantly prevalent in industrialized countries. In wealthier countries people may voluntarily choose a diet which may cause a reduced iron intake, such as a vegetarian diet. Food fortification is one method to increase iron intake along with dietary diversification and enhancement of iron absorption.

The World Health Organization (WHO) recommended that ferrous sulphate should be the first choice among iron fortificants because of its high bioavailability [Guidelines on food fortification with micronutrients. World Health Organization, 2006]. However, potentially adverse organoleptic changes can occur in certain food products fortified with ferrous sulphate that necessitate the choice of other iron forms that are less chemically reactive in that food matrix, although at the cost of lower bioavailability relative to ferrous sulphate. For example iron can accelerate oxidation reactions, adversely altering the food's flavour, and iron can also lead to colour changes.

Unwanted colour changes in compositions such as foods may be caused by iron forming complexes with phenolic chromophore compounds. A chromophore is a region of a molecule where the energy difference between two different molecular orbitals is such that visible light can be absorbed by exciting an electron from its ground state into an excited state. Phenolic chromophore compounds have at least one phenol structure as part of the chromophore. Examples of phenolic chromophore compounds include anthocyanins, anthocyanidins, betanin, gallic acid, curcumin and carminic acid.

The problem of unwanted colour change may occur when the iron-containing material is initially added but it may also occur after prolonged storage or after application of heat. For example, colour change in foods fortified by iron may occur on cooking the food or if the food is sterilized using heat. Many foods need to be sterilized to provide a long shelf life or to be safely consumed by sensitive groups such as the sick or very young.

The interaction between iron ions and phenolic chromophores can cause a change in the maximum absorption wavelength. Typically this is a change to a longer wavelength, such a change being referred to as a bathochromic shift. The light absorption intensity may also increase; this is the hyperchromic effect. For food comprising phenolic chromophore compounds, a bathochromic shift due to the addition of iron causes the food to change colour, which is generally undesirable.

The problem of colour change when fortifying food with iron is particularly apparent with food compositions containing fruit and/or vegetables. The colour of many fruits and vegetables is derived from phenolic chromophore compounds and so addition of iron leads to a bathochromic shift in the colour of the phenolic chromophore compounds resulting in an undesirable change in the colour of the food. Fruit and vegetables intrinsically provide a good source of beneficial dietary nutrients, and so are a good basis for delivering additional nutritional benefits to food. There is therefore a need to provide iron fortified food compositions containing fruit and/or vegetables which do not exhibit undesirable colour changes.

EP1011344 describes chocolate-flavoured beverage mixes and other edible mixes that are fortified with sources of iron such as ferrous fumarate and ferrous sulphate, yet do not develop undesirable gray colour when the beverage mix is reconstituted with aqueous liquids including fruit juice. The problem of gray colour development is solved by including edible acids such as citric or malic acid as buffering agents in the beverage mix so that the pH of the reconstituted chocolate beverage is about 6.5 or less. Controlling the pH to be acidic does not always suit the desired taste of the product. Also, controlling the pH is generally most suitable for beverages, where any coloured components are generally dissolved or dispersed in a continuous aqueous phase and so can be influenced by added acids. For non-beverage food compositions it may be difficult to ensure that all the components responsible for the development of an undesirable colour are affected by added acids.

WO97/15201 discloses colour-stable iron fortified fruit flavoured dry drink mixes where the iron is added as ferric sulphate encapsulated in solid fats, or as iron chelated with amino acids. However, it may not always be desirable to add solid fats into food; and iron chelated with amino acids is more expensive than many other iron compounds.

There remains a need to provide improved or alternative food compositions which provide a nutritional source of iron without exhibiting undesirable colour changes. In particular there is a need to provide non-beverage food compositions comprising fruit and/or vegetables which provide iron with good bioavailability, stabilized against colour change by compounds which occur naturally.

An object of the present invention is to improve the state of the art and to provide a solution to overcome at least some of the inconveniences described above or at least to provide a useful alternative. Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

The object of the present invention is achieved by the subject matter of the independent claims. The dependent claims further develop the idea of the present invention.

Accordingly, an aspect of the present invention provides a food composition comprising fruit and/or vegetables, ferrous picolinate and phenolic chromophore compounds. Further aspects of the invention are the use of ferrous picolinate to fortify a food product without colour change and a process for fortifying a food product with iron comprising preparing a food product containing fruit and/or vegetables and adding ferrous picolinate.

Picolinic acid (pyridine-2-carboxylic acid) is an important natural chelator in the human body and in other mammals. It chelates minerals such as chromium, zinc, manganese, copper and iron. Ferrous picolinate is the co-ordination complex of the picolinate anion with $Fe^{2+}$ ions. Observations have suggested that administering physiological levels of ferrous picolinate can effectively improve iron profile in humans (US4315927).

The inventors surprisingly found that ferrous picolinate may be used to fortify food materials containing phenolic chromophore compounds without causing the problems of colour change usually experienced with iron fortification. For example, a heat treated strawberry and banana yoghurt fortified with ferrous picolinate showed a similar extent of colour change to a strawberry and banana yoghurt with no added iron when stored at 37 °C for 30 days; whereas yoghurts fortified with other iron salts such as ferrous sulphate showed much greater colour changes under the same conditions. The inventors also found that ferrous picolinate may be used to fortify food materials containing phenolic chromophore compounds without causing the problems of colour change associated with heat treatment. For example, after pasteurization at 105 °C for 2 minutes, strawberry and banana yoghurts fortified with ferrous picolinate were closer in colour to unfortified yoghurts than were yoghurts fortified with ferric pyrophosphate, ferric sodium EDTA or ferrous sulphate.

Consequently the present invention relates in part to a non-beverage food composition comprising fruit and/or vegetables, ferrous picolinate and phenolic chromophore compounds. The iron may be present at a level of at least 1 parts per million by weight in the composition, for example at least 5 parts per million. The ferrous picolinate may be present at a level of at least 20 parts per million by weight in the composition, for example at least 100 parts per million. The ferrous picolinate may be present at a level to provide between 0.01 and 10 mg of iron per 100 g of the composition. The phenolic chromophore compounds may be comprised within the fruit and/or vegetables, or they may be added separately, for example, a natural colour such as carmine added to improve the colour. The phenolic chromophore compounds may contribute to the colour of the food composition. In the scope of the current invention the phenolic chromophore compounds contribute to the colour of the food composition if removing substantially all the phenolic chromophore compounds from the food composition would cause a difference in colour of sufficient magnitude that a human observer would perceive the difference between two samples shown one after the other but not simultaneously. For example, phenolic chromophore compounds contribute to the colour of the food composition where removing all the phenolic chromophore compounds would lead to a change in colour having a ΔEab* value greater than 2, for example greater than 3, measured on the CIE 1976 L*a*b* colour scale.

The CIE 1976 L*a*b* (hereinafter CIELAB) colour scale is one method of measuring colour proposed by the Commission Internationale de l'Éclairage (CIE) [CIE Technical Report, Colorimetry 2nd Edition, CIE 15.2 - 1986, corrected reprint 1996]. The CIELAB colour space is produced by plotting the quantities L*, a*, b* in rectangular coordinates. The L* coordinate of an object is the lightness intensity as measured on a scale from 0 (black) to 100 (absolute white). The a* and b* coordinates have no specific numerical limits. The parameter a* runs from pure green (negative a*) to pure red (positive a*), while b* runs from pure blue (negative b*) to pure yellow (positive b*).

In the CIELAB colour space, colour difference may be calculated as a single value taking into account the differences between the L*, a* and b* values of two samples. The colour difference ΔEab* is calculated as follows:

$$\Delta Eab^* = \sqrt{(\Delta L^*)^2 + (\Delta a^*)^2 + (\Delta b^*)^2}$$

The term non-beverage food composition is used in the current specification to mean food compositions which are not drinks. Drinks are liquids consumed for refreshment or nourishment and include alcoholic and non-alcoholic drinks, carbonated drinks, fruit or vegetable juices and hot drinks such as coffee or tea.

The term fruit is used in the current specification in the culinary sense of the word. Fruits are the fleshy seed-associated structures of a plant that are sweet and edible in the raw state, such as apples, oranges, grapes, strawberries and bananas. This includes fruits from cultivated varieties of plants which produce seedless fruits such as seedless grapes and common varieties of bananas. The term fruit is not used here in the botanical sense; for example, beans, nuts and cereal grains are not considered fruits in the context of the current invention. The fruit may be for example selected from the group consisting of blackcurrant, cranberry, elderberry, red currant, boysenberry, grape, cherry, orange, lemon, lime, mandarin, tangerine, grapefruit, pineapple, mango, papaya, passion fruit, kiwifruit, guava, fig, date, apple, plum, strawberry, raspberry, blueberry, blackberry, apricot, pear, banana, quince, wolfberry and mixtures of these. The fruit may have a sugar content in its fresh ripe state of greater than 4 wt.%. The term vegetables is used in the current specification in the culinary sense of the word. Vegetables are edible plants or parts of plants, intended for cooking or eating raw.

The phenolic chromophore compounds of the invention may be selected from the group consisting of curcumin; carminic acid; betanin; polyphenols, including anthocyanins, anthocyanidins and gallic acid; and mixtures of these. These compounds are commonly found in foods. The phenolic chromophore compounds may be comprised within other ingredients, for example gallic acid in banana puree, anthocyanins in blueberries or curcumin in turmeric. Alternatively, the phenolic chromophore compounds may be added directly as a colour, for example carminic acid added in the form of carmine which is an aluminium salt of carminic acid commonly used as a food colour. The phenolic chromophore compounds of the invention may be those commonly found in fruits or vegetables, for example the phenolic chromophore compounds of the invention may be selected from the group consisting of polyphenols, including anthocyanins, anthocyanidins and gallic acid; and mixtures of these. The phenolic chromophore compounds of the invention may be anthocyanins.

The greater the quantity of phenolic chromophore compounds in a food composition, the greater the potential colour change will be in the presence of iron. The phenolic chromophore compounds may be present in an amount between 0.0005 and 5 wt% of the composition

The non-beverage food composition of the invention may comprise fruit at a level of at least 1 wt.% in the food composition, for example at a level of at least 2 wt.%, for further example at a level of at least 5 wt.%. The maximum level of fruit may be close to 100 wt.%, for example a fruit purée fortified by ferrous picolinate at 0.015% would contain 99.985 wt.% fruit if there were no other ingredients. For processed fruits such as dried fruit or fruit powder, 1 wt.% means 1% by weight of fresh fruit equivalent. The fruit may, for example, be in the form of fresh fruit, fresh fruit pieces, fruit powder, dried fruit, or fruit purée. Fruit provides beneficial dietary nutrients, such as vitamins and minerals together with dietary antioxidants such as polyphenols. These strong nutritional credentials make food compositions comprising fruit a suitable vehicle for further fortification, such as with iron. Fruit can also add attractive texture and colour to food compositions. The fruit may be selected from the group consisting of strawberry, raspberry, blueberry, blackberry, apricot, pear, banana, quince, wolfberry and mixtures of these.

The non-beverage food composition of the invention may comprise vegetables at a level of at least 1 wt.% in the food composition, for example at a level of at least 2 wt.%, for further example at a level of at least 5 wt.%. The maximum level of vegetables may be close to 80 wt.%, for example a beetroot and potato purée fortified by ferrous picolinate. For processed vegetables such as vegetable powder, 1 wt.% means 1% by weight of fresh vegetable equivalent. The vegetables may, for example, be in the form of fresh vegetables, fresh vegetable pieces, vegetable powder or dehydrated vegetables. Vegetables provide beneficial dietary nutrients, such as vitamins and minerals. These strong nutritional credentials make food compositions comprising vegetables a suitable vehicle for further fortification, such as with iron. The vegetables may be selected from the group consisting of red cabbage, purple cauliflower, purple broccoli, purple sweet potato, olives, beetroot and mixtures of these. These vegetables have high levels of phenolic chromophore compounds and so are particularly susceptible to colour change with iron, so it is beneficial that food compositions comprising these vegetables may be fortified without significant problems of colour change.

The non-beverage food compositions of the invention may be red in colour. Ferrous picolinate itself has a red/orange colour and so is particularly unnoticeable in red coloured compositions. "Red" within the scope of the present invention refers to a CIELAB hue angle $h_{ab}$ between 335° and 80°. An angle between 335° and 80° refers to all the angles between 335° and 360° and all the angles between 0° and 80°, (0° and 360° being equivalent). Red materials with a high lightness intensity may be described as pink. The hue angle $h_{ab}$ is calculated from a* and b* values as:

$$h_{ab} = \arctan\left(b^*/a^*\right)$$

where $h_{ab}$ lies between 0° and 90° if b* and a* are both positive, between 90° and 180° if b* is positive and a* is negative, between 180° and 270° if b* and a* are both negative, and between 270° and 360° if b* is negative and a* is positive.

The food composition of the invention may further comprise yoghurt. Yoghurt is a good source of calcium, helping to form and maintain strong bones. Yoghurt may also be fortified with other beneficial minerals such as magnesium and zinc. However, fortifying yoghurt with iron presents a problem if the yoghurt contains phenolic chromophore compounds, such as may be found in yoghurts containing fruit. For example, a blueberry yoghurt, coloured by the anthocyanins in blueberries, will change colour after addition of iron; the anthocyanins undergoing a bathochromic shift. Similarly a banana yoghurt, which was initially a pale yellow colour, may develop an unattractive grey-blue colour on addition of iron. Bananas comprise polyphenols such as gallic acid, catechin, epicatechin and epigallocatechin. It is an advantage that the invention provides iron fortified food compositions comprising yoghurt where these colour change problems do not occur or are greatly reduced.In the context of the present invention the term yoghurt is a thick non-beverage food prepared from milk fermented by added bacteria, for example spoonable yoghurts and strained yoghurts such as Greek yoghurt. The term yoghurt may include, but is not limited to, materials complying with local food labelling regulations concerning the term "yoghurt".

A further aspect of the invention is the use of ferrous picolinate to fortify a food product without colour change. Some changes in appearance can be detected by appropriate instruments but would not be of concern to someone consuming a product. The term "colour change" in this specification may be considered to be a difference in colour of sufficient magnitude that a human observer would perceive the difference between two samples shown one after the other (not simultaneously). For example, a colour change may be considered to be a CIELAB ∆Eab* colour difference greater than 2, for example greater than 2.5. In certain food matrices, and at elevated levels of iron addition the reddish orange colour of ferrous picolinate may itself lead to a small colour change when ferrous picolinate is used to fortify a food product. Ferrous picolinate may be used to fortify a food product such that there is a reduced colour change compared to ferrous sulphate added at the same total level of iron.

Ferrous picolinate may be used according to the invention to fortify a food product without colour change over the product's shelf-life. For example, the CIELAB ∆Eab* colour difference between an iron fortified food product at the time of its manufacture and the end of its shelf-life under recommended storage conditions may be less than 3, for example less than 2. Shelf life is the recommended length of time that foods, beverages, and many other perishable items can be stored during which the defined quality of a specified proportion of the goods remains acceptable under expected (or specified) conditions of distribution, storage and display. Typically a "best before date" (BBD) is printed on packaged perishable foods together with recommended storage conditions. Where such a BBD is indicated, the shelf-life is the time between manufacture and the BBD. Where a BBD is not indicated, the shelf-life is the equivalent period usual for the relevant product type. Ferrous picolinate may be used according to the invention to fortify a food product such that there is a reduced colour change over the product's shelf-life compared to ferrous sulphate added at the same total level of iron.

Problems of colour change in iron-containing products frequently occur when the product is heated, for example during a sterilization or pasteurization processes. The invention provides a means to prevent undesirable colour changes in a product which has been both fortified with iron and heat treated.

Ferrous picolinate may be used to fortify a food product without colour change wherein the food product is heat treated. For example, the iron fortified food product may have a ∆Eab* value less than 3, for example less than 2, after a heat treatment of 2 minutes at 105 °C when compared to the unfortified heat treated food product. Ferrous picolinate may be used to fortify a food product which is heat treated so that there is a reduced colour change over the product's shelf-life compared to ferrous sulphate added at the same total level of iron.

The food product which may be fortified according to the invention may comprise fruit and/or vegetables. For example the food product may be a fruit purée or fruit joghurt. It is beneficial to be able to fortify fruit purees and fruit yoghurts with vitamins and minerals. Fruit purees and fruit yoghurts are suitable foods for infants and young children, with fruit purees commonly introduced to infants' diets from the age of 6-7 months and fruit yoghurts from 8-12 months. It is important for infants and young children to eat a balanced diet including foods rich in iron. However, fortifying fruit purees and fruit yoghurts with iron may make them sensitive to undesirable colour changes. It is therefore advantageous that the use of ferrous picolinate according to the current invention allows the fortification of fruit purees and fruit yoghurts without colour change, or with a reduced colour change compared to ferrous sulphate added at the same total level of iron.

The food product which may be fortified according to the invention may be a biscuit, cake or pastry product; a cereal bar; a breakfast cereal; an ice cream product; a dessert; a prepared meal; a nutritional supplement or a pet food product. All of these products may pose problems of colour change when fortified by iron. For example biscuit, cake and pastry products may be coloured by natural colours such as anthocyanins or carmine; the products may have coloured fillings or coatings. Cereal bars may contain coloured fruit such as cranberries, or have coloured inclusions containing added vitamins and minerals, such as small chewy pieces of jelly. Breakfast cereals may contain fruit, for example fruit inclusions or fruit fillings. Ice creams and desserts may be coloured by anthocyanins, particularly when fruit flavoured. Prepared meals and nutritional supplements may contain fruits for example in the form of fruit powder, or may be coloured by the addition of natural colours to make them more appealing. Pet foods such as dog treats may contain fruit, for example berries. Pet foods for dogs and cats may contain vegetables such as beetroot. All these products may be sensitive to colour change on addition of iron. It is therefore an advantage that ferrous picolinate may be used to fortify these products without colour change, for example colour change caused by a bathochromic shift. A process for fortifying a food product with iron comprising preparing a non-beverage food product containing fruit and/or vegetables and adding ferrous picolinate is described. Such a process has the advantage of producing a iron fortified product which, despite containing fruit and/or vegetables, may be less sensitive to colour change, for example the colour change due to iron interacting with phenolic chromophore compounds leading to bathochromic shifts. The process for fortifying the food product with iron may further comprise heat treatment, for example heat treatment to reduce or eliminate food spoilage organisms. Fortifying a food product with iron means increasing the content of iron in the food, normally to improve its nutritional quality. The iron may, or may not have been originally in the food. A process for manufacturing a colour-stable iron fortified non-beverage food product comprising phenolic chromophore compounds is described, the process comprising preparing a non-beverage food product comprising phenolic chromophore compounds and adding ferrous picolinate. In the context of the current application the term "colour-stable" means that the product has a $\Delta$Eab* value less than 3, for example less than 2, after a heat treatment of 2 minutes at 105 °C when compared to an otherwise identical product subjected to the same heat treatment but which has not been fortified with iron.

Examples

*Example 1: Colour change in iron fortified strawberry-banana yoghurts*

Commercial yoghurt, Nestlé Jogolino™ Strawberry/Banana yoghurt containing 15 % banana puree and 10 % strawberry puree was iron fortified by the addition of different iron salts to 5 kg yoghurt as reported in the table below. The amounts were chosen to provide approximately 0.8 mg iron per 100g yoghurt. Ferrous sulphate, ferric sodium EDTA and ferric pyrophosphate were obtained from *Dr Paul Lohmann*™. Ferrous picolinate was prepared according to the procedure of US4315927 Example 3. The yoghurts were flash pasteurized at 105 °C for 2 minutes. Colour measurements were performed in 1x1 cm polystyrene cuvettes using an X-Rite ColorEye 7000A colorimeter. The colorimeter was set up with a D65 light source, 10 degree observer angle and with specular component included. The colour difference between the yoghurt with no iron salts and the iron fortified yoghurt was measured for each iron salt and expressed as $\Delta$Eab* using the CIELAB colour scale.

| Trial No | Fe Salt | % Fe | Amount (mg) | $\Delta$Eab* |
|---|---|---|---|---|
| 1 | $FeSO_4$ x $H_2O$ | 32.0 | 124.3 | 4.74 |
| 2 | NaFeEDTA x $H_2O$ | 12.5 | 318.0 | 3.11 |
| 3 | $Fe_4(P_2O_7)_3$ x $H_2O$ | 24.0 | 165.6 | 3.43 |
| 4 | Ferrous picolinate | 14.5 | 275.8 | 1.28 |

The yoghurt fortified with ferrous picolinate had the closest colour to the yoghurt with no added iron.
70 g samples of the fortified yoghurt samples described above were placed in 100 mL glass jars and stored at 37 °C for 120 days. Colour measurements were performed at a range of time intervals. The colour difference between the colour of the stored yoghurts and their colour as measured immediately after pasteurization was calculated for each yoghurt sample and is reported in the table below.

| | | $\Delta$Eab* | | | |
|---|---|---|---|---|---|
| Trial No | Fe Salt | day 7 | day 30 | day 60 | day 120 |
| 0 | None | 0.75 | 1.97 | 3.77 | 6.83 |
| 1 | $FeSO_4$ x $H_2O$ | 0.78 | 3.27 | 5.91 | 10.34 |
| 2 | NaFeEDTA x $H_2O$ | 0.96 | 4.16 | 6.93 | 9.37 |
| 3 | $Fe_4(P_2O_7)_3$ x $H_2O$ | 1.09 | 3.61 | 6.21 | 10.23 |
| 4 | Ferrous picolinate | 0.51 | 2.18 | 4.66 | 8.19 |

The colour change over time for the yoghurt fortified with ferrous picolinate was smaller than the yoghurts fortified by the other iron salts. Indeed, the yoghurt fortified with ferrous picolinate had a similar colour change to the unfortified yoghurt over the 30 day period.

*Example 2: Iron bio-accessibility of iron fortified strawberry-banana yoghurts*

The bio-accessibility of iron in the yoghurts fortified with different iron-containing compounds was measured using Caco-2 cells in conjunction with in vitro digestion [R.P. Glahn et al., Journal of Food Science, 64(5), 925-928. (1999)]. The level of iron in all the yoghurts was 100 $\mu$g/g.

In brief, first the yoghurt was subjected to a simulated gastric digestion with pepsin at pH=2, 37°C for 1 hour. This step was followed by a simulated intestinal digestion with pancreatin and bile at pH=7, 37°C for 2 hours. This second step took place on a dialysis membrane in the presence of Caco-2 monolayers. During the digestion process iron is released from the food matrix. Then, solubilized Fe can diffuse and be taken up by the cells. Thus, in response to higher intracellular Fe concentrations, Caco-2 cell will form ferritin. Therefore, the formation of ferritin is quantified as an indicator of Fe uptake by the cells. Ferritin is measured by ELISA in harvested Caco-2 cell 24 hours after the digestion. Results are normalized with the total protein contents of Caco2 cells and are expressed as ng ferritin/mg protein. To ensure the robustness of the results, three experiments were performed on separate days using cells from the same batches with three replicates. Data collected from the same treatment were pooled. Enzymes and buffer are used as blank. NaFeEDTA fortified at 100 $\mu$g/g with Fe was used as an internal standard and as positive control. The yoghurts fortified with ferrous picolinate were found to have a similar bioaccessibility to those fortified with $FeSO_4$.

**Claims**

1. Non-beverage food composition comprising fruit and/or vegetables, ferrous picolinate and phenolic chromophore compounds.

2. A non-beverage food composition according to claim 1 wherein the phenolic chromophore compounds are selected from the group consisting of curcumin, carminic acid, betanin, polyphenols and mixtures of these.

3. A non-beverage food composition according to claim 1 or claim 2 wherein the food composition comprises fruit selected from the group consisting of strawberry, raspberry, blueberry, blackberry, apricot, pear, banana, quince, wolfberry and mixtures of these.

4. A non-beverage food composition according to any one of claims 1 to 3 wherein the food composition comprises vegetables selected from the group consisting of red cabbage, purple cauliflower, purple broccoli, purple sweet potato, olives, beetroot and mixtures of these.

5. A non-beverage food composition according to any one of claims 1 to 4 wherein the food composition is red in colour.

6. A non-beverage food composition according to any one of claims 1 to 5 wherein the food composition further comprises yoghurt.

7. Use of ferrous picolinate to fortify a non-beverage food product without colour change.

8. Use of ferrous picolinate according to claim 8 wherein the colour change over the product's shelf-life is prevented.

9. Use of ferrous picolinate according to claim 7 or claim 8 wherein the food product is heat treated.

10. Use of ferrous picolinate according to any one of claims 7 to 9 wherein the food product comprises fruit and/or vegetables.

11. Use of ferrous picolinate according to any one of claims 7 to 10 wherein the food product is a fruit purée or fruit yoghurt.

12. Use of ferrous picolinate according to any one of claims 7 to 11 wherein the food product is a biscuit, cake or pastry product; a cereal bar; a breakfast cereal; an ice cream product; a dessert; a prepared meal; a nutritional supplement or a pet food product.

**Patentansprüche**

1. Nicht-Getränke-Nahrungsmittelzusammensetzung, umfassend Obst und/oder Gemüse, eisenhaltiges Picolinat und phenolische Chromophorverbindungen.

2. Nicht-Getränke-Nahrungsmittelzusammensetzung nach Anspruch 1, wobei die phenolischen Chromophorverbindungen ausgewählt sind aus der Gruppe bestehend aus Curcumin, Karminsäure, Betanin, Polyphenolen und Mischungen dieser.

3. Nicht-Getränke-Nahrungsmittelzusammensetzung nach Anspruch 1 oder Anspruch 2, wobei die Nahrungsmittelzusammensetzung Obst umfasst, ausgewählt aus der Gruppe bestehend aus Erdbeere, Himbeere, Blaubeere, Brombeere, Aprikose, Birne, Banane, Quitte, Wolfsbeere und Mischungen dieser.

4. Nicht-Getränke-Nahrungsmittelzusammensetzung nach einem der Ansprüche 1 bis 3, wobei die Nahrungsmittelzusammensetzung Gemüse umfasst, ausgewählt aus der Gruppe bestehend aus Rotkohl, violettem Blumenkohl, violettem Brokkoli, violetter Süßkartoffel, Oliven, Rote Beete und Mischungen dieser.

5. Nicht-Getränke-Nahrungsmittelzusammensetzung nach einem der Ansprüche 1 bis 4, bei der die Nahrungsmittelzusammensetzung eine rote Farbe aufweist.

6. Nicht-Getränke-Nahrungsmittelzusammensetzung nach einem der Ansprüche 1 bis 5, bei der die Nahrungsmittelzusammensetzung ferner Joghurt umfasst.

7. Verwendung von eisenhaltigem Picolinat zum Anreichern eines Nicht-Getränke-Nahrungsmittelprodukts ohne Farbveränderung.

8. Verwendung von eisenhaltigem Picolinat nach Anspruch 8, wobei die Farbveränderung über den Haltbarkeitszeitraum des Produkts verhindert wird.

9. Verwendung von eisenhaltigem Picolinat nach Anspruch 7 oder Anspruch 8, wobei das Nahrungsmittelprodukt wärmebehandelt wird.

10. Verwendung von eisenhaltigem Picolinat nach einem der Ansprüche 7 bis 9, wobei das Nahrungsmittelprodukt Obst und/oder Gemüse umfasst.

11. Verwendung von eisenhaltigem Picolinat nach einem der Ansprüche 7 bis 10, wobei das Nahrungsmittelprodukt ein Fruchtmus oder Fruchtjoghurt ist.

12. Verwendung von eisenhaltigem Picolinat nach einem der Ansprüche 7 bis 11, wobei das Nahrungsmittelprodukt ein Keks-, Kuchen- oder Gebäckprodukt; ein Getreideriegel; ein Getreidefrühstück; ein Speiseeisprodukt; ein Dessert; eine zubereitete Mahlzeit; eine Nahrungsergänzung oder ein Haustiernahrungsprodukt ist.

## Revendications

1. Composition alimentaire autre que des boissons comprenant des fruits et/ou des légumes, du picolinate ferreux et des composés chromophores phénoliques.

2. Composition alimentaire autre que des boissons selon la revendication 1, dans laquelle les composés chromophores phénoliques sont choisis dans le groupe consistant en la curcumine, l'acide carminique, la bétanine, les polyphénols et des mélanges de ceux-ci.

3. Composition alimentaire autre que des boissons selon la revendication 1 ou la revendication 2, dans laquelle la composition alimentaire comprend des fruits choisis dans le groupe constitué de fraise, framboise, myrtille, mûre, abricot, poire, banane, coing, goji et des mélanges de ceux-ci.

4. Composition alimentaire autre que des boissons selon l'une quelconque des revendications 1 à 3, dans laquelle la composition alimentaire comprend des légumes choisis dans le groupe constitué de chou rouge, chou-fleur violet, brocoli pourpre, patate douce pourpre, olives, betteraves et des mélanges de ceux-ci.

5. Composition alimentaire autre que des boissons selon l'une quelconque des revendications 1 à 4, dans laquelle la composition alimentaire est de couleur rouge.

6. Composition alimentaire autre que des boissons selon l'une quelconque des revendications 1 à 5, dans laquelle la composition alimentaire comprend en outre du yaourt.

7. Utilisation de picolinate ferreux pour fortifier un produit alimentaire autre que des boissons sans changement de couleur.

8. Utilisation de picolinate ferreux selon la revendication 8, dans laquelle le changement de couleur au cours de la durée de conservation du produit est évité.

9. Utilisation de picolinate ferreux selon la revendication 7 ou la revendication 8, dans laquelle le produit alimentaire est traité thermiquement.

10. Utilisation de picolinate ferreux selon l'une quelconque des revendications 7 à 9, dans laquelle le produit alimentaire comprend des fruits et/ou des légumes.

11. Utilisation de picolinate ferreux selon l'une quelconque des revendications 7 à 10, dans laquelle le produit alimentaire est une purée de fruit ou un yaourt aux fruits.

12. Utilisation de picolinate ferreux selon l'une quelconque des revendications 7 à 11, dans laquelle le produit alimentaire est un produit de biscuit, de gâteau ou de pâtisserie ; une barre de céréales ; une céréale de petit-déjeuner ; un produit de crème glacée ; un dessert ; un plat préparé ; un supplément nutritionnel ou un produit alimentaire pour animaux de compagnie.

**EP 3 086 665 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1011344 A
- WO 9715201 A
- US 4315927 A

**Non-patent literature cited in the description**

- Guidelines on food fortification with micronutrients. World Health Organization, 2006
- CIE Technical Report, Colorimetry. CIE, 1986, 15.2
- **R.P. GLAHN et al.** *Journal of Food Science,* 1999, vol. 64 (5), 925-928